# EUROPÄISCHE PATENTSCHRIFT

(11) **EP 0 554 248 B1**
(45) Veröffentlichungstag und Bekanntmachung des Hinweises auf die Patenterteilung: **13.07.1994**
(21) Anmeldenummer: 91906276.0
(22) Anmeldetag: 08.03.1991
(51) Int. Cl.: B21B 27/02, F16D 1/08

(54) **WALZE FÜR EIN WALZGERÜST MIT EINEM AUSWECHSELBAREN WALZRING UND EINEM GETEILTEN WALZENKÖRPER**
ROLLER FOR A ROLL STAND WITH AN INTERCHANGEABLE ROLLER RING AND A DIVIDED ROLLER BODY
CYLINDRE POUR CAGE DE LAMINOIR AVEC COURONNE ET CORPS CYLINDRIQUE DIVISE

(30) Priorität: 24.10.1990 DE 9014728 U
(43) Veröffentlichungstag der Anmeldung: 11.08.1993
(73) Patentinhaber: Kark, Uwe, D-21149 Hamburg (DE)
(72) Erfinder: Kark, Uwe, D-21149 Hamburg (DE)
(74) Vertreter: Glawe, Delfs, Moll & Partner
(86) Internationale Anmeldenummer: EP9100440
(87) Internationale Veröffentlichungsnummer: WO9207668

(56) Entgegenhaltungen:
- EP-A- 0 040 808
- EP-A- 0 292 358
- EP-A- 0 343 440
- WO-A-88/09444
- DE-A- 1 811 614

## Beschreibung

Die Erfindung bezieht sich auf eine Walze für ein Walzgerüst mit einem auswechselbaren Walzring und einem geteilten Walzenkörper, dessen beide Teile jeweils einen Spannflansch für den Walzring bilden und miteinander durch eine zentrale Zugverbindung verbunden sind, sowie mit einer Axialspanneinrichtung, die eine Gewindeeinrichtung zur Übertragung der zwischen den beiden Teilen des Walzenkörpers wirkenden Kräfte und zu deren Grundeinstellung, eine hydraulische Spanneinrichtung zum Spannen der Anordnung und eine mechanische Fixiereinrichtung zum Fixieren des hydraulisch erzeugten Spannzustands umfaßt. Eine solche Walze ist bekannt aus der EP-A-0 343 440.

Es ist bekannt (US-A-4,117,705, US-E-.31,554), einen oder mehrere Walzringe auf einem Walzenkörper mittels einer Axialspanneinrichtung zu spannen, die drei Elemente umfaßt, nämlich erstens eine Mutter, mit deren Hilfe der Walzring und die zu seiner axialen Spannung vorgesehene Anordnung in eine Grundeinstellung gebracht werden kann, aus welcher heraus der Spannzustand entwickelt wird, und die die zum Spannen des Walzrings erzeugte Kraft auf den Walzenkörper überträgt;
zweitens eine hydraulische Spanneinrichtung zum Spannen der Anordnung; und drittens eine mechanische Fixiereinrichtung, durch die der hydraulisch erzeugte Spannzustand fixiert wird, bevor die hydraulische Spanneinrichtung entlastet wird. Diese Anordnung beansprucht einen beträchtlichen axialen Platz, der auf kurzen, für moderne Kompaktwalzgerüste bestimmten Walzen nicht zur Verfügung steht. Um dennoch das Prinzip der axialen Walzringspannung auch bei Kompaktwalzgerüsten verwenden zu können, ist die eingangs bekannte Konstruktion vorgeschlagen worden, die einen geteilten Walzenkörper aufweist. Jeder der beiden Walzenkörperteile bildet einen einstückig mit ihm verbundenen Spannflansch zum axialen Spannen des Walzrings. Dieses Spannen erfolgt mittels eines im Zentrum der Walze vorgesehenen Zugankers, der durch eine Bohrung des einen Walzenkörperteils aus diesem herausgeführt ist, damit am Ende der Walze, jenseits des einen Lagers dieser Walze, die erwähnte Axialspanneinrichtung untergebracht werden kann (offenkundige Vorbenutzung). Jedoch hat sich gezeigt, daß bei dieser Konstruktion der Walzring in manchen Fällen nicht hinreichend starr gehalten wird, was möglicherweise mit einer konstruktionsbedingten Biegeweichheit des Walzenkörpers zusammenhängt.

Der Erfindung liegt die Aufgabe zugrunde, eine für ein Kompaktwalzgerüst geeignete Walze zu schaffen, die diese Nachteile nicht aufweist. Ausgehend von der eingangs genannten Walze besteht die Lösung darin, daß die beiden Teile des Walzenkörpers innerhalb des Walzrings einander hohlzylindrische Fortsätze entgegenstrecken, die ein Gewinde aufweisen, mittels dessen sie unmittelbar oder mittelbar über einen Gewindezapfen oder eine Gewindehülse miteinander verbunden sind und daß die hydraulische Spanneinrichtung und die mechanische Fixiereinrichtung am Außenumfang der Walze angeordnet sind.

Dieser Lösung liegen vier wesentliche gedankliche Elemente zugrunde. Das erste besteht in der Erkenntnis, daß der Platzbedarf der Axialspanneinrichtung hauptsächlich von der Mutter verursacht wird, während die hydraulische Spanneinrichtung und die mechanische Fixiereinrichtung mit geringem axialem Platzbedarf am Walzenumfang neben dem Walzring ausgeführt werden können, wenn man beispielsweise das in der EP-A 0 343 440 offenbarte Bauprinzip nutzt. Das zweite Element besteht in dem Gedanken, daß es nicht notwendig ist, die axiale Spanneinrichtung als konstruktive Einheit aufzufassen und daß daher die Mutter auch an anderer Stelle untergebracht werden kann. Das dritte Gedankenelement besteht darin, daß die Mutter bzw. eine diese ersetzende Gewindeeinrichtung als Teil der Zugverbindung ausgeführt werden kann, die ohnehin vorgesehen sein muß, um die beiden Teile des Walzenkörpers miteinander zu verbinden. Schließlich besteht das letzte Element des Erfindungsgedankens darin, daß man dank der Erfindung die Zugverbindung auf den Mittelbereich des Walzenkörpers beschränken kann und ihn also nicht in Form eines Zugankers aus der Walze axial herausführen muß, und daß man dadurch die mit der Belastung der Walze verbundene Längsdehnung der auf Zug belasteten Walzenkörperteile entscheidend reduziert. Der lange, vergleichsweise dünne, aus dem Walzenkörper axial herausgeführte Zuganker der bekannten Konstruktion wirkt nämlich wie eine Zugfeder, die die gesamte Konstruktion weichmacht. Da naturgemäß auch Spiel zwischen dem Zuganker der bekannten Konstruktion und der ihn umgebenden Hülse vorhanden sein muß, können sich diese Teile auch relativ zueinander bewegen, was unter der hohen Betriebsbelastung zu einem gegenseitigen "Arbeiten" der Walzenkörperelemente und damit zu einer unzureichenden Fixierung des Walzrings führt. Wenn man hingegen erfindungsgemäß die Zugverbindung auf diejenige Längserstreckung beschränkt, die für die Verbindungsfunktion erforderlich ist, vermeidet man zum einen ein dünnes, langes und daher in Längsrichtung leicht dehnbares Element und gewinnt zudem die konstruktive Freiheit, die Zugverbindung so einfach und kompakt auszuführen, daß gegenseitiges Spiel der einzelnen Elemente nahezu oder gänzlich ausgeschlossen ist. Man vereinfacht auch die Konstruktion, weil die Gewindeeinrichtung, die zum Ersatz der Mutter der Axialspanneinrichtung dient, gleichzeitig für die Zugverbindung der Walzenkörperteile genutzt wird.

Wie an sich bekannt, ist es zweckmäßig, den Walzring nicht nur axial zu spannen, sondern ihm auch eine radiale Abstützung zu geben. Zu diesem Zweck sind bei der bekannten Konstruktion an den beiden Teilen des Walzenkörpers benachbart den Axialspannflanschen Radialsitzflächen vorgesehen, die mit der Bohrung des Walzrings zusammenwirken. Um ihn sicher abstützen zu können, muß der Radialsitz spielfrei mit der Bohrung des Walzrings zusammenwirken. Dies ist nur durch einen Preßsitz zu verwirklichen, der einerseits bei der Montage zu Oberflächenschäden an den zusammenwirkenden Flächen führen kann und andererseits axial nur kurz ausgebildet werden kann, so daß der hochbeanspruchte mittlere Bereich des Walzrings radial ungestützt bleibt. Nach einem Ausführungsbeispiel der Erfindung läßt dieser Nachteil sich dadurch beseitigen, daß ein Radialsitz für die Bohrung des Walzrings, der von mindestens einem der beiden Körperteile gebildet ist, mittels einer in der Zugverbindung vorgesehenen Keileinrichtung unter der von der Zugverbindung übertragenen Kraft zur Beseitigung des Montagespiels spreizbar ist. Zwar ist es bekannt, bei hauptsächlich axial wirkenden Einrichtungen zum Spannen von Walzringen zusätzlich eine auf Keilwirkung beruhende Radialunterstützung vorzusehen. Neu ist jedoch die Nutzung der Erkenntnis, daß die in der Zugverbindung der beiden Walzenkörperteile übertragene Kraft unmittelbar zur Spreizung des Radialsitzes herangezogen werden kann.

Diese Spreizung kann man mit Konuseinrichtungen bewerkstelligen, denen aber der grundsätzliche Nachteil anhaftet, daß auf Axialzug beanspruchte Konusse an demjenigen Ende, an dem sie den geringsten Querschnitt aufweisen, die höchste Zugspannung aufnehmen müssen. Dies ist zumal in dem erfindungsgemäßen Zusammenhang, in welchem es im Hinblick auf die Starrheit der Konstruktion auf größtmögliche Querschnitte ankommt, unerwünscht. Die Erfindung vermeidet diesen Nachteil dadurch, daß sie die geneigten Flanken eines Gewindes als Keilanordnung verwendet; ein solches Gewinde kann leicht innerhalb des Radialsitzes bzw. der Radialsitze untergebracht werden, wobei die Querschnitte und Durchmesser und Flankenwinkel des Gewindes so bemessen werden, daß unter der zwischen den beiden Walzkörperteilen herrschenden Zugkraft mindestens das Montagespiel zwischen den Radialsitzflächen und der Bohrung des Walzrings kompensiert wird. Darüber hinaus kann gewünschtenfalls auch eine gewisse radiale Vorspannung des Walzrings erzeugt werden.

Das Vorhandensein eines Montagespiels ermöglicht es, den Radialsitz bzw. die Radialsitze axial beliebig auszudehnen, so daß ein beliebig großer Anteil der Walzringbohrung dadurch abgestützt werden kann. Zweckmäßigerweise wird der Walzring auf dem größeren Teil seiner Länge abgestützt, weiter zweckmäβigerweise auf mehr als drei Vierteln seiner Länge.

Der radialen Abstützung des Walzrings sowie der Starrheit der Konstruktion kommt dabei zugute, daß die etwa hohlzylindrischen Teile, die den Radialsitz bzw. die Radialsitze bilden, auf ihrer gesamten Länge von einem sie durchsetzenden Gewindebolzen abgestützt sein können. Diese Abstützung ist trotz des notwendigerweise ursprünglich Montagespiel enthaltenden Gewindes wirksam, weil es die hohe Axialkraft überträgt und daher die Gewindeflanken der zusammenwirkenden Teile spielfrei und starr zusammengehalten werden. Obwohl der Walzenkörper innerhalb des Walzrings aus mehreren Teilen zusammengesetzt ist, verhält er sich daher starr wie ein einstückiger Körper.

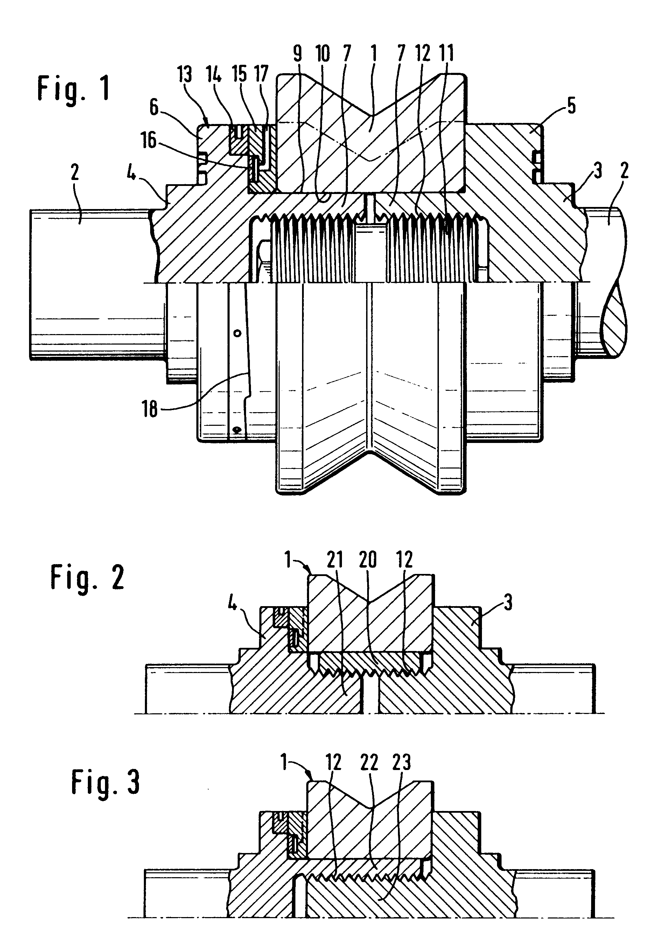

Die Erfindung wird im folgenden näher erläutert unter Bezugnahme auf die Zeichnung, die schematisch Ausführungsbeispiele der Erfindung veranschaulicht. Darin zeigen Fig. 1 bis 3 unterschiedliche Ausführungsbeispiele im Längsschnitt.

Die Walze besteht aus dem Walzring 1 und dem den Lagerkörper haltenden und zwei Lagerzapfen 2 bildenden Walzenkörper, der aus den Teilen 3 und 4 besteht, die etwa symmetrisch aufgebaut sind. Jeder von ihnen weist einen Flansch 5 bzw. 6 auf, der mit je einer Stirnfläche des Walzrings 1 zusammenwirkt, um diesen axial zu spannen. Innerhalb des Walzrings 1 strecken die Teile 3, 4 des Walzenkörpers einander hohlzylindrische Fortsätze 7 entgegen, die im folgenden als Radialsitze bezeichnet werden, weil ihr Außenumfang 9 eine radial abstützende Sitzfläche Sitz die Bohrung 10 des Walzrings 1 bildet. Der Durchmesser des Umfangs 9 ist im entspannten Zustand wenig kleiner als der Durchmesser der Bohrung 10. Der Unterschied liegt in der Größenordnung einiger Hundertstel bis einiger Zehntel Millimeter. Innerhalb der Radialsitze 7 befindet sich ein Zapfen 11, wobei die Radialsitze 7 und der Zapfen 11 mit einem zusammenwirkenden Gewinde 12 ausgerüstet sind, vorzugsweise einem Trapezgewinde. Die Beseitigung des Montagespiels im Walzring sorgt dafür, daß die beiden Walzenkörperteile genau fluchtend zentriert sind.

Während der Flansch 5 massiv ausgebildet ist, setzt sich der Flansch 6 aus einem mit dem Kern des Walzkörperteils 3 einstückigen Teil 13, einem Fixierring 14 und einem Anlagering 15 zusammen. Der Anlagering 15 enthält eine ringförmige Kolbenzylindereinrichtung 16, die über einen Kanal 17 mit hydraulischem Druckmedium gespeist werden kann. Der Fixierring 14 und der Anlagering 15 weisen in der Fläche, in der sie zusammenwirken, in Umfangsrichtung verlaufende, komplementäre Schrägflächen 18 auf. Wegen Einzelheiten dieser Anordnung kann auf die bereits erwähnte EP-A 0 343 440 verwiesen werden.

Bei der Montage wird zunächst der Gewindezapfen 11 in die Gewindebohrung des Walzenkörperteils 3 eingeschraubt. Der Walzring 1 wird auf den Sitz 7 dieses Walzkörperteils aufgesetzt. Der Walzenkörperteil 4 wird mit seinem Radialsitz 7 in den Walzring 1 eingefügt und gleichzeitig auf den Zapfen 11 aufgeschraubt. Während sich der Fixierring 14 und der Anlagering 15 in ihrer Ausgangslage befinden, die durch geringste gemeinsame Länge gekennzeichnet ist, werden die beiden Teile 5, 6 des Walzenkörpers soweit zusammengeschraubt, daß der Walzring 1 fest zwischen ihnen eingespannt ist. Danach wird die hydraulische Spanneinrichtung 16 mit Druck beaufschlagt, um die Anordnung zu spannen. Die Spannkräfte, die von dem Anlagering 15 über den Walzring 1, Flansch 5, Radialsitz 7 des Walzkörperteils 5, Zapfen 11, Radialsitz 7 des Walzkörperteils 4, Flansch 6 zurück auf den Kolben 16 des Anlagerings 15 übertragen werden, führen zu einer Dehnung dieser Teile und damit zur Bildung eines Spalts zwischen dem Anlagering 15 und dem Fixierring 14. Wenn der gewünschte Spannzustand erreicht ist, wird dieser dadurch gesichert, daß der Fixierring 14 bis zur Anlage der Flanken 18 verdreht wird. Danach wird die hydraulische Spanneinrichtung entspannt, wobei aber der Spannzustand dank dem Fixierring 14 aufrechterhalten wird.

Der Flankenwinkel des Gewindes 12, die Dicke der Radialsitzteile 7 und das Spiel zwischen den Flächen 9 und 10 ist so bemessen, daß unter der im Gewinde 12 wirkenden Spannung und der Keilwirkung an den Gewindegängen die Radialsitze 7 in Radialrichtung soweit gedehnt werden, daß das Montagespiel zwischen den Flächen 9 und 10 verschwindet und gegebenenfalls eine bestimmte radiale Vorspannung auf den Walzring 1 ausgeübt wird.

Man erkennt, daß diese Anordnung zu einem reibfesten Verbund nicht nur zwischen dem Walzring 1 und den Flanschen 5, 6 führt, sondern auch zwischen der Bohrung 10 des Walzrings 1, der Außenfläche 9 der Radialsitze 7 sowie zwischen den zusammenwirkenden Gewindeflanken der Radialsitze 7 und des Zapfens 11. Diese Teile können leicht so bemessen werden, daß unter den herrschenden Spannungen Relativbewegungen zwischen ihnen ausgeschlossen sind. Die Walze verhält sich daher wie ein einstückiger, starrer Körper.

Die Ausführung gemäß Fig. 2 unterscheidet sich von derjenigen gemäß Fig. 1 dadurch, daß das die beiden Walzkörperteile 3, 4 verbindende dritte Glied 20 als Hülse ausgebildet ist, während die Walzenkörperteile entsprechende Zapfen 21 aufweisen, die mit der Hülse 20 über ein Gewinde 12 zusammenwirken. Die Hülse 20 und der Flankenwinkel des Gewindes 12 sowie das Montagespiel zwischen der Außenfläche der Hülse 20 und der Bohrung des Walzrings 1 sind ebenso wie in dem vorgenannten Beispiel so bemessen, daß das Montagespiel im gespannten Zustand der Anordnung verschwindet. Als Alternative kann vorgesehen sein, daß die Hülse 20 bei Umgebungs- oder Betriebstemperatur denselben Durchmesser wie die Walzringbohrung oder sogar ein gewisses Übermaß hat und man sich zur Montage einer Temperaturdifferenz zwischen diesen beiden Teilen bedient. Der Spreizeffekt bei der Hülse 20 kann dann entfallen oder entsprechend geringer bemessen werden.

Im Ausführungsbeispiel gemäß Fig. 3 wird der Radialsitz 22 lediglich von einem der beiden Walzenkörperteile gebildet, während der Zapfen 23 Teil des anderen Walzenkörperteils ist.

Soweit nichts anderes gesagt ist, gelten im übrigen die Erläuterungen zu dem ersten Ausführungsbeispiel auf für die Beispiele gemäß Fig. 2 und 3. Insbesondere haben diese Ausführungsbeispiele im wesentlichen dieselben Vorteile.

## Patentansprüche

1. Walze für ein Walzgerüst mit einem auswechselbaren Walzring (1) und einem geteilten Walzenkörper, dessen beide Teile (3, 4) jeweils einen Spannflansch (5, 6) bilden und miteinander durch eine zentrale Zugverbindung (7, 11, 12; 20, 21, 12; 22, 23, 12) verbunden sind, sowie mit einer Axialspanneinrichtung, die eine Gewindeeinrichtung zur Übertragung der zwischen den beiden Teilen (3, 4) des Walzenkörpers wirkenden Kräfte und zu deren Grundeinstellung, eine hydraulische Spanneinrichtung (15, 16) zum Spannen der Anordnung und eine mechanische Fixiereinrichtung (14, 15, 18) zum Fixieren des hydraulisch erzeugten Spannzustands umfaßt, dadurch gekennzeichnet, daß die beiden Teile (3, 4) des Walzenkörpers innerhalb des Walzrings (1) einander hohlzylindrische Fortsätze (7; 21; 22, 23) entgegenstrecken, die ein Gewinde (12) aufweisen, mittels dessen sie unmittelbar (Fig. 3) oder mittelbar über einen Gewindezapfen (11) oder eine Gewindehülse (20) miteinander verbunden sind, und daß die hydraulische Spanneinrichtung (15, 16) und die mechanische Fixiereinrichtung (14, 15) am Außenumfang der Walze angeordnet sind.

2. Walze nach Anspruch 1, dadurch gekennzeichnet, daß wenigstens einer der beiden Walzenkörperteile (3, 4) einen mit der Bohrung (10) des Walzrings unter Einschluß eines Montagespiels zusammenwirkenden Radialsitz (7) bildet und dieser mittels einer in der Zugverbindung (7, 11, 12; 20, 21, 12; 22, 23, 12) vorgesehenen Keileinrichtung unter der von der Zugverbindung übertragenen Kraft zur Beseitigung des Montagespiels spreizbar ist.

3. Walze nach Anspruch 1 oder 2, dadurch gekennzeichnet, daß die beiden Walzenkörperteile (3, 4) je einen spreizbaren Radialsitz (7) bilden.

4. Walze nach einem der Ansprüche 1 bis 3, dadurch gekennzeichnet, daß der Radialsitz bzw. die Radialsitze den Walzring (1) auf dem größeren Teil seiner Länge stützen.

5. Walze nach einem der Ansprüche 1 bis 4, dadurch gekennzeichnet, daß die Keileinrichtung von den geneigten Flanken eines Gewindes (12) innerhalb des (der) Radialsitzes (Radialsitze) gebildet ist.

## Claims

1. A roller for a roll stand with an interchangeable rolling ring (1) and a split roller body, both parts (3, 4) of which form a respective clamping flange (5, 6) and are pulled together by central connection means (7, 11, 12; 20, 21, 12; 22, 23, 12), and also with axial clamping means which comprise a threaded device for the transmission and basic adjustment of the forces acting between the two parts (3, 4) of the roller body, a hydraulic clamping device (15, 16) for clamping the assembly and a mechanical securing device (14, 15, 18) for securing the hydraulically generated clamping condition, characterised in that the two parts (3, 4) of the roller body inside the rolling ring (1) are extended by mutually opposed hollow cylindrical extensions (7; 21; 22, 23) each of which have a thread (12), by means of which threads they are joined together directly (Fig. 3) or indirectly via a threaded journal (11) or a threaded sleeve (20), and in that the hydraulic clamping device (15, 16) and the mechanical securing device (14, 15) are disposed on the outer periphery of the roller.

2. A roller according to Claim 1, characterised in that at least one of the two roller body parts (3, 4) forms a radial seating (7) which co-operates with a bore (10) of the rolling ring under the effect of an assembly clearance and which can be expanded by means of a wedge device provided in the connection means (7, 11, 12; 20, 21, 12; 22, 23, 12) under the pulling force transmitted by the connection means, so as to obviate the assembly clearance.

3. A roller according to Claim 1, characterised in that the two roller body parts (3, 4) each form an expandable radial seating (7).

4. A roller according to any one of Claims 1 to 3, characterised in that the radial seating or the radial seatings support the rolling ring (1) over the majority of its length.

5. A roller according to any one of Claims 1 to 4, characterised in that the wedge device is formed by the inclined flanks of a thread (12) within the radial seating or seatings.

## Revendications

1. Cylindre pour cage de laminoir, comprenant une couronne de cylindre remplaçable (1) et un corps de cylindre divisé, dont les deux parties (3, 4) forment chacune un collet de serrage (5, 6) et sont jointes l'une à l'autre par un assemblage central travaillant en traction (7, 11, 12; 20, 21, 12; 22, 23, 12), ainsi qu'un dispositif de serrage axial qui comprend un dispositif à vis pour la transmission des forces qui agissent entre les deux parties (3, 4) du corps de cylindre et pour le réglage de base de ces forces, un dispositif de serrage hydraulique (15, 16) pour le serrage de l'ensemble et un dispositif de fixation mécanique (14, 15, 18) pour fixer l'état de serrage créé hydrauliquement, caractérisé en ce que les deux parties (3, 4) du corps de cylindre présentent, à l'intérieur de la couronne de cylindre (1), des prolongements cylindriques creux (7; 21; 22, 23) qui s'étendent l'un vers l'autre et qui comportent un filetage (12) au moyen duquel ils sont joints directement (fig. 3) ou indirectement par l'intermédiaire d'une broche filetée (11) ou d'une douille taraudée (20), et en ce que le dispositif de serrage hydraulique (15, 16) et le dispositif de fixation mécanique (14, 15) sont disposés à la périphérie extérieure du cylindre.

2. Cylindre selon la revendication 1, caractérisé en ce que l'une au moins des deux parties (3, 4) du corps de cylindre forme un siège radial (7) qui coopère avec la forure (10) de la couronne de cylindre en ménageant un jeu de montage, et en ce que ce siège est élargissable, pour la suppression du jeu de montage, sous l'effet de la force transmise par l'assemblage travaillant en traction (7, 11, 12; 20, 21, 12; 22, 23, 12), au moyen d'un système de coin prévu dans cet assemblage travaillant en traction.

3. Cylindre selon la revendication 1 ou 2, caractérisé en ce que chacune des deux parties (3, 4) du corps de cylindre forme un siège radial élargissable (7).

4. Cylindre selon l'une quelconque des revendications 1 à 3, caractérisé en ce que le siège radial ou les sièges radiaux soutiennent la couronne de cylindre (1) sur la plus grande partie de sa longueur.

5. Cylindre selon l'une quelconque des revendications 1 à 4, caractérisé en ce que le système de coin est constitué par les flancs inclinés d'un filetage (12) en dedans du siège radial ou des sièges radiaux.
